# EUROPÄISCHE PATENTSCHRIFT

(11) **EP 1 049 603 B1**
(45) Veröffentlichungstag und Bekanntmachung des Hinweises auf die Patenterteilung: **16.01.2002**
(21) Anmeldenummer: 99907287.9
(22) Anmeldetag: 21.01.1999
(51) Int. Cl.: B60N 2/42

(54) **FAHRZEUGSITZ, INSBESONDERE KRAFTFAHRZEUGSITZ**
VEHICLE SEAL, ESPECIALLY AN AUTOMOBILE SEAT
SIEGE DE VEHICULE, EN PARTICULIER SIEGE DE VEHICULE AUTOMOBILE

(30) Priorität: 22.01.1998 DE 19803784
(43) Veröffentlichungstag der Anmeldung: 08.11.2000
(73) Patentinhaber: Takata-Petri AG, 63743 Aschaffenburg (DE)
(72) Erfinder: ADOMEIT, Heinz-Dieter, D-10623 Berlin (DE); AL SAMARAE, Sami, D-13187 Berlin (DE)
(74) Vertreter: Baumgärtel, Gunnar, Dr.
(86) Internationale Anmeldenummer: DE9900202
(87) Internationale Veröffentlichungsnummer: WO9937500

(56) Entgegenhaltungen:
- EP-A- 0 718 144
- DE-A- 4 128 954
- GB-A- 1 322 280
- GB-A- 1 348 873
- GB-A- 2 087 226
- US-A- 4 154 472

## Beschreibung

Die Erfindung betrifft einen Fahrzeugsitz, insbesondere Kraftfahrzeugsitz, nach dem Oberbegriff des Anspruchs 1 (s. zum Beispiel die GB-A-2 087 226).

Es ist bekannt, Fahrzeugsitze so zu polstern, daß sie in der Lage sind, Beschleunigungen auf den Insassen bei Erschütterungen des Fahrzeuges, z.B. bei Kraftfahrzeugen infolge von Unebenheiten auf Straßen oder bei Booten infolge des Wellenschlags, zumindest zu verringern.

Weiterhin ist aus der EP 0 718 144 A1 ein Sitz für ein Motorrad bekannt, bei dem im Sitzpolster, d.h., im Komfortbereich, von Motorradsitzen zusätzliche Energieabsorptionselemente angeordnet sind. Diese bestehen vorzugsweise aus weichem Polyurethanschaum, sind in unterschiedlicher Form im Sitzpolster angeordnet und erstrecken sich in Richtung der Längsachse des Fahrzeuges über eine gewisse Länge im Sitz. In einer Ausführungsform weisen sie an ihrer Vorderkante eine größere Dicke als an der Hinterkante auf, wobei die Dicke kontinuierlich abnimmt und ihre Oberseite schräg nach hinten abfällt. Dadurch soll verstärkt vermieden werden, daß sich das Becken des Fahrers durch Vibrationen und bei Verzögerungen des Fahrzeuges nach vorn verlagert.

Mit diesen Energieabsorptionselementen können möglicherweise Vibrationen und Beschleunigungen des Beckens bei Verzögerungen des Fahrzeugs vermindert werden, wie sie beim Abbremsen auftreten. In der Praxis treten Konstellationen auf, bei denen Energieabsorptionselemente die Beschleunigungen des Beckens nach vorn, vor allem bei Anwendung in einem Auto, nicht ausreichend vermindern, wenn große Verzögerungen des Fahrzeugs , wie im Crashfall, auftreten. Bei diesen Verzögerungen wird die Unterschale des Fahrzeugsitzes erst in einer späten Vorverlagerungsphase des Beckens mit vertikalen und horizontalen Kräften beaufschlagt. Das Kraftniveau liegt dabei zu niedrig für eine Energieabsorption. Die kinetische Energie des Insassen wird daher in diesen Fällen bei einem in einem Kraftfahrzeug angeschnallten Insassen dominant über das Gurtsystem abgebaut, Aufgrund der Kraft-Weg-Kennung des Gurtbandes kann das zu unnötig erhöhten Beckenbelastungen und zu starken Belastungen der Lendenwirbelsäule durch unkontrollierte Beckenrotation führen.

Aus der o.g, GB-A- 2,087,226 ist ein Fahrzeugsitz in Schalenstruktur bekannt, dessen Schale sich aus einem hinteren und einem vorderen, jeweils aus Metall bestehenden, flächigen Schalenelement zusammensetzt. Das hintere Schalenelement ist im wesentlichen eben auagebildet und unterhalb der Rückenlehne an der Sitzstruktur befestigt. Das mit dem hinteren Schalenelement verbundene vordere Schalenelement erstreckt sich vom vorderen Ende der Rückenlehne bis zum vorderen Ende des Sitzpolsters und ist dort nach oben hin gekrümmt. Der nach oben gekrümmte vordere Abschnitt des vorderen Schalenelementes dient zur Aufnahme von Crash-Kräften, wenn eine auf dem Sitz befindliche Person als Folge eines Crashes nach vorne beschleunigt wird. Durch die von dem nach oben gekrümmten Abschnitt des vorderen Schalenelementes ausgeübten Rückhaltekräfte soll insbesondere verhindert werden, daß der Insasse nach vorne von dem Sitz abhebt.

Der Erfindung liegt die Aufgabe zugrunde, durch einen frühzeitigen Anstieg der Rückhaltekräfte und eine Erhöhung des Energieabsorptionsvermögens des Sitzsystems die Insassenbelastungen bei großer Verzögerung des Fahrzeugs, insbesondere infolge eines Crashs, zu vermindern.

Erfindungsgemäß wind das bei einem Fahrzeugsitz der im Oberbegriff des Anspruchs 1 genannten Art durch die kennzeichnenden Merkmale des Anspruchs 1 erreicht.

Bei einem Fahrzeugsitz, insbesondere Kraftfahrzeugsitz, wobei der Sitz mindestens ein Energieabsorptionselement aufweist, ist erfindungsgemäß als Energieabsorptionselement eine im Vorderteil des Sitzes unter dem Komfortbereich angeordnete, in horizontaler Richtung durch das Becken des Insassen bei dessen Vorverlagerung infolge starker Verzögerung des Fahrzeuges, insbesondere infolge eines Crashs, verformbare Stütze angeordnet, und die Sitzstruktur ist im hinteren Bereich des Sitzes, insbesondere nahe der Stütze zumindest teilweise durch das Becken des Insassen bei dessen Vorverlagerung infolge starker Verzögerung des Fahrzeuges nach unten verformbar, wobei die Höhenlage der Stütze zumindest nahezu unverändert bleibt.

Der Vorteil dieser Anordnung besteht darin, daß im Crashfall ein Formschluß zwischen den Becken-Sitzbeinhöckern des Insassen einerseits sowie Sitzstruktur und Stütze andererseits erzeugt wird, so daß die auf den Insassen wirkenden Rückhaltekräfte verstärkt vom Sitz aufgebraucht werden. Bei einer großen Verzögerung des Fahrzeugs macht das Becken während der Horizontalvorverlagerung, bedingt durch den Beckengurt, auch eine vertikale Eindringbewegung in die in Fahrtrichtung gesehen vor der Stütze angeordnete deformierbare Sitzstruktur. Da die Stütze vertikal mit einer hohen Steifigkeit versehen ist, und der Kraftfluß zwischen Stütze und deformierbarer Sitzstruktur in geeeigneter Weise ganz oder teilweise entkoppelt ist, wird eine Deformation der Stütze in dieser Richtung nahezu unterbunden. Es bildet sich ein Absatz, der ein Abgleiten des Insassen verhindert. Bei weiterer Vorverlagerung des Beckens wird die Stütze in horizontaler Richtung verformt und das Becken mit angemessenen Rückhaltekräften beaufschlagt. Das Becken wird gewissermaßen wie in einem Fangbügel horizontal in Beschleunigungsrichtung des Insassen abgebremst. Durch diese gezielte Beaufschlagung des Beckens mit Rückhaltekräften werden Insassenbelastungen vermindert.

Die Sitzsystemkomponenten sind derart ausgelegt, daß der Formschluß erst im Crashfall erzeugt wird, im normalen Fahrbetrieb aus Komfortgründen also nicht spürbar ist.

In einer Ausführungsform erstreckt sich die Stütze über die gesamte Sitzbreite und ist an den Enden mit der Sitzstruktur verbunden, während im übrigen Bereich keine Verbindung zur Sitzstruktur besteht. Dadurch wird die für die Bildung des Absatzes notwendige Deformation des in Fahrtrichtung gesehen vor der Stütze liegenden Bereiches der Sitzstruktur gewährleistet.

Bei einer schalenförmigen Sitzstruktur weist die Schale einen quer zur Längsachse des Fahrzeugs verlaufenden Schlitz auf, in dem die Stütze angeordnet ist. Die Breite des Schlitzes ist so bemessen, daß die Verformbarkeit der Stütze in horizontaler Richtung auch bei einer schalenförmigen Sitzstruktur gewährleistet ist.

Eine weitere Ausführungsform weist ebenfalls eine schalenförmige Sitzstruktur auf, wobei in diesem Fall eine Verbindung zwischen der Stütze und dem davor liegenden Bereich der Sitzstruktur über die gesamte Sitzbreite besteht. Die im Crashfall gewünschte Deformation der Sitzstruktur wird hier durch eine Blechfalte gewährleistet, die in Fahrtrichtung gesehen vor der Stütze vorgesehen ist.

In einer dritten Ausführungsform wird die Verformbarkeit der Sitzstruktur durch die Ausbildung des in Fahrtrichtung gesehen vor der Stütze liegenden Bereiches als Geflecht gewährleistet. Hierbei ist die Verbindung zwischen der Stütze und der Sitzstruktur zweckmäßig im mittleren Bereich unterbrochen.

Bedingt durch die Gurtgeometrie führt das Becken während der Vorverlagerung eine vertikale Eindringbewegung in den Sitz aus, wobei der hintere Bereich des Sitzes vertikal verformt wird. Zur Aufrechterhaltung des dadurch in Fahrtrichtung gesehen vor der Stütze erzeugten Absatzes ist es zweckmäßig, daß die Stütze in vertikaler Richtung eine große Steifigkeit aufweist um auszuschließen, daß der Insasse über den Absatz hinweg gleitet.

Die Stütze besteht in einer Ausführungsform aus einem Rohr mit einem zur Erhöhung der Steifigkeit in vertikaler Richtung angesetzten Steg. Als weitere Ausführung für eine Stütze ist jede Profilform denkbar, die einer Verformung in vertikaler Richtung einen ausreichend großen Widerstand entgegensetzt und durch die Möglichkeit einer horizontalen Deformation den Insassen mit akzeptablen Rückhaltekräften beaufschlagt.

Die Erfindung soll in Ausführungsbeispielen anhand von Zeichnungen erläutert werden. Es zeigen:
- Fig. 1: eine schematische Darstellung einer Ausführungsform eines Fahrzeugsitzes mit quer verlaufendem Schlitz vor einer Stütze,
- Fig. 2: den Fahrzeugsitz nach Fig. 1 während der Verzögerungsphase des Fahrzeuges,
- Fig. 3: den Fahrzeugsitz nach Fig. 1 in einer fortgeschrittenen Verzögerungsphase des Fahrzeuges,
- Fig. 4: eine schematische Darstellung einer zweiten Ausführungsform eines Fahrzeugsitzes mit einer quer verlaufenden Falte vor der Stütze in einer Sitzschale,
- Fig. 5: eine schematische Darstellung einer dritten Ausführungsform eines Fahrzeugsitzes mit einem Geflecht vor der Stütze,
- Fig. 6: die Vorderansicht einer als Energieabsorptionselement ausgebildeten Stütze,
- Fig. 7: die Seitenansicht der Stütze nach Fig. 6.

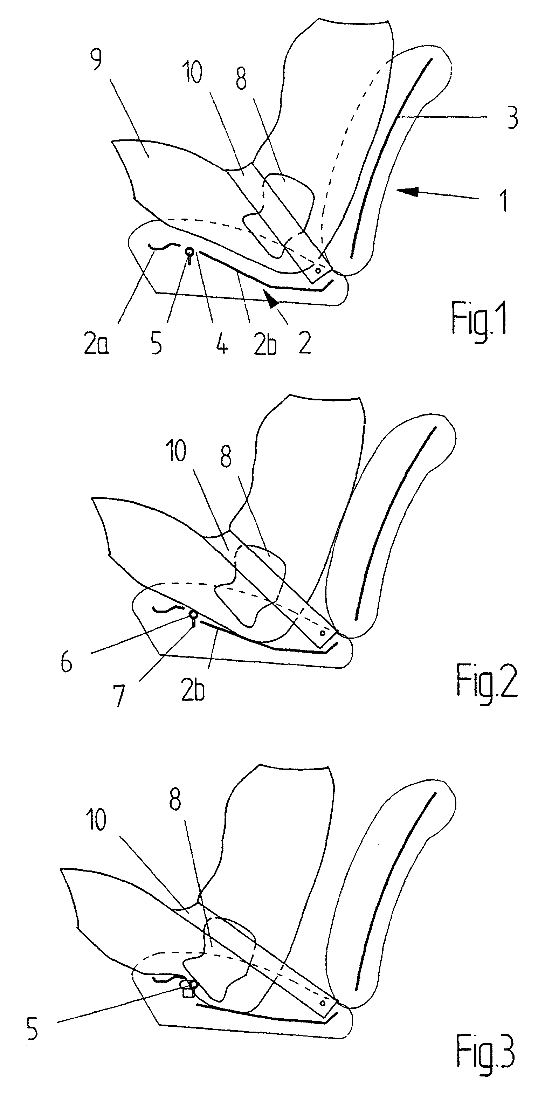

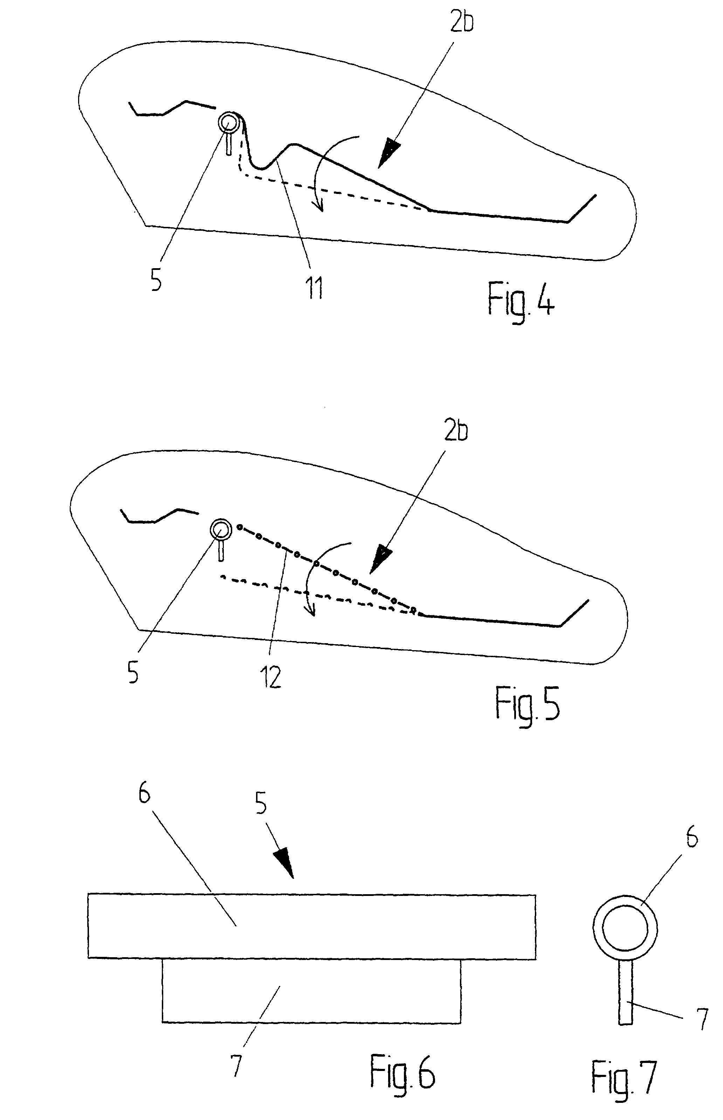

Der in der Fig. 1 schematisch dargestellte Fahrzeugsitz 1 weist eine Sitzschale 2 sowie eine Rückenlehne 3 auf. Die Sitzschale 2 weist im vorderen Bereich einen Schlitz 4 auf, der sich zumindest nahezu über die gesamte Breite der Sitzschale erstreckt. Die Sitzschale 2 wird durch den Schlitz 4 in einen vorderen Bereich 2a und einen hinteren Bereich 2b unterteilt. In diesem Schlitz ist eine Stütze 5 als Energieabsorptionselement angeordnet, das aus einem Rohr 6 und einem Steg 7 besteht, der sich über den mittleren Bereich des Rohres und in senkrechter Richtung erstreckt (Figuren 6 und 7).

Die Stütze ist nur an ihren Enden mit der Sitzstruktur verbunden. In horizontaler Richtung ist die Stütze mit einer Steifigkeit versehen, die eine Deformation durch den Insassen nach der Erzeugung des Formschlusses gestattet. In vertikaler Richtung weist sie dagegen eine hohe Steifigkeit auf, so daß eine Verformung in dieser Richtung praktisch nicht möglich oder unterdrückt ist. Das Rohr 6 ist im Schlitz so angeordnet, daß es oben mit der Sitzschale abschließt, d.h., nicht aus dieser herausragt. Die Stütze dringt also im normalen Fahrbetrieb nicht in die Polsterung ein, und ist für den Insassen deshalb nicht spürbar.

Die Fig. 1 zeigt ebenfalls schematisch das Becken 8 des Insassen und den Beckengurt 10.

Bei einer großen Verzögerung des Fahrzeugs, z.B. infolge eines Crashs, hat das Becken das Bestreben, sich nach vorn zu verlagern. Bedingt durch den Beckengurt 10 führt das Becken während der Horizontalvorverlagerung auch eine vertikale Eindringbewegung in den Sitz aus. Durch die erfindungsgemäße Ausbildung des Sitzes deformiert das Becken dadurch den hinteren Bereich 2b der Sitzschale 2, d.h., den in Fahrtrichtung gesehen vor der Stütze 5 liegenden Bereich, nach unten, wie es in der Fig. 2 dargestellt ist. Besonders leicht läßt sich die Sitzschale am Schlitz 4 deformieren, so daß die Stütze 5, deren Höhenlage sich nicht verändert, die Sitzschale überragt. Dadurch wird ein Formschluß zwischen den Becken-Sitzbeinhöckern und der Stütze erzielt und schließlich kommt es zu einer Art Verhakung zwischen beiden. Die Versteifung des Rohres 6 durch den Steg 7 verhindert die Deformation der Stütze in vertikaler Richtung und somit ein Übergleiten des Beckens 8 über das Rohr 6. In horizontaler Richtung wird die Stütze dagegen gezielt deformiert, wobei das Becken mit angemessener Kraft zurückgehalten wird. Das Becken wird gewissermaßen wie in einem Fangbügel horizontal in Beschleunigungsrichtung abgebremst, wie es aus der Fig. 3 erkennbar ist. Dadurch wird die kinetische Energie des Insassen 9 bei einem Crash sowohl durch den Beckengurt 10 als auch durch die Stütze 5 abgebaut, so daß die Belastung des Insassen verringert wird.

Beim Ausführungsbeispiel der Fig. 4 weist die Sitzschale 2 in Fahrtrichtung gesehen vor der Stütze 5 eine Falte 11 auf. In diesem Ausführungsbeispiel ist die Sitzschale mit der Stütze 5 verbunden. Im Crashfall wird der Bereich 2b durch den Insassen nach unten gedrückt, so daß die Sitzschale dann den gestrichelt gezeichneten Verlauf aufweist. In Verbindung mit der Stütze 5 wird die gleiche Wirkung erzielt wie beim vorhergehenden Ausführungsbeispiel.

Beim Ausführungsbeispiel der Fig. 5 besteht der vor der Stütze 5 liegende Bereich 2b des Sitzes aus Geflecht 12. Dieses ist quer zur Fahrtrichtung gesehen im mittleren Bereich nicht mit der Stütze 5 verbunden. Im Crashfall verformt sich das Geflecht nach unten und nimmt die in der Fig. 5 gestrichelt gezeichnete Lage ein. Damit wird die Stütze in gleicher Weise wie bei den vorhergehenden Ausführungsbeispielen wirksam.

## Patentansprüche

1. Fahrzeugsitz, insbesondere Kraftfahrzeugsitz, wobei
a) der Sitz mindestens ein Energieabsorptionselement aufweist,
b) als Energieabsorptionselement eine im Vorderteil des Sitzes (2) unter dem Komfortbereich angeordnete, in horizontaler Richtung durch das Bekken (8) des Insassen (9) bei dessen Vorverlagerung infolge starker Verzögerung des Fahrzeuges, insbesondere infolge eines Crashs, verformbare Stütze (5) vorgesehen ist und
c) die Sitzstruktur im hinteren Bereich (2b) des Sitzes, insbesondere nahe der Stütze (5) zumindest teilweise durch das Becken (8) des Insassen (9) bei dessen Vorverlagerung infolge starker Verzögerung des Fahrzeuges nach unten verformbar ist,
**dadurch gekennzeichnet,**
**daß** die verformbare Stütze (5) im Vorderteil des Sitzes (2) als separates Bauteil angeordnet ist und daß der Kraftfluß zwischen der Stütze (5) und der deformierbaren Sitzstruktur ganz oder teilweise entkoppelt ist, so daß die Höhenlage der Stütze (5) bei der Verformung der Sitzstruktur zumindest nahezu unverändert bleibt.

2. Fahrzeugsitz nach Anspruch 1, **dadurch gekennzeichnet, daß** sich die Stütze (5) über die gesamte Sitzbreite erstreckt und an den Enden mit der Sitzstruktur verbunden ist, während im übrigen Bereich keine Verbindung zur Sitzstruktur besteht.

3. Fahrzeugsitz nach Anspruch 1, **dadurch gekennzeichnet, daß** sich die Stütze (5) über die gesamte Sitzbreite erstreckt und an den Enden mit der Sitzstruktur verbunden ist, wobei im übrigen Bereich eine durchgehende oder teilweise unterbrochene Verbindung zur Sitzstruktur besteht.

4. Fahrzeugsitz nach Anspruch 1 oder 2, **dadurch gekennzeichnet, daß** bei einer schalenförmigen Sitzstruktur die Schale (2) einen quer zur Längsachse des Fahrzeugs verlaufenden Schlitz (4) aufweist, in dem die Stütze (5) angeordnet ist.

5. Fahrzeugsitz nach mindestens einem der vorhergehenden Ansprüche, **dadurch gekennzeichnet, daß** der hintere Bereich (2b) der Sitzstruktur als Geflecht (12) ausgebildet ist, vor dem die Stütze (5) angeordnet ist.

6. Fahrzeugsitz nach mindestens einem der vorhergehenden Ansprüche 1 bis 4, **dadurch gekennzeichnet, daß** bei einer schalenförmigen Sitzstruktur die Schale (2) mindestens eine quer zur Längsachse des Fahrzeuges verlaufende Falte (11) aufweist, vor der die Stütze (5) angeordnet ist.

7. Fahrzeugsitz nach mindestens einem der vorhergehenden Ansprüche, **dadurch gekennzeichnet, daß** die Stütze (5) in vertikaler Richtung eine so große Steifigkeit aufweist, daß sie in dieser Richtung weitestgehend unverformbar ist.

8. Fahrzeugsitz nach mindestens einem der vorhergehenden Ansprüche, **dadurch gekennzeichnet, daß** die Stütze (5) aus einem Rohr (6) mit einem senkrechten Steg (7) besteht.

## Claims

1. Vehicle seat, in particular motor vehicle seat,
a) the seat having at least one energy absorption element,
b) a support (5) being arranged as the energy absorption element, the said support being arranged in the front part of the seat (2) below the comfort region and being deformable in the horizontal direction by the pelvis (8) of the occupant (9) when the latter is displaced forward as a consequence of a sharp deceleration of the vehicle, in particular as a consequence of a crash, and
c) the seat structure can be deformed downward in the rear region (2b) of the seat, in particular in the vicinity of the support (5), at least partially due to the pelvis (8) of the occupant (9) when the latter is displaced forward as a consequence of a sharp deceleration of the vehicle,
**characterized in that** the deformable support (5) is arranged as a separate component in the front part of the seat (2) and **in that** the force flux between the support (5) and the deformable seat structure is completely or partially uncoupled, so that the vertical position of the support (5) remains at least virtually unchanged during deformation of the seat structure.

2. Vehicle seat according to Claim 1, **characterized in that** the support (5) extends over the entire seat width and is connected at the ends to the seat structure, while there is no connection to the seat structure in the remaining region.

3. Vehicle seat according to Claim 2, **characterized in that** the support (5) extends over the entire seat width and is connected at the ends to the seat structure, there being a continuous or partially interrupted connection to the seat structure in the remaining region.

4. Vehicle seat according to Claim 1 or 2, **characterized in that** in the case of a seat structure in the form of a shell, the shell (2) has a slot (4) which runs transversely to the longitudinal axis of the vehicle and in which the support (5) is arranged.

5. Vehicle seat according to at least one of the preceding claims, **characterized in that** the rear region (2b) of the seat structure is formed as interwoven material (12) in front of which the support (5) is arranged.

6. Vehicle seat according to at least one of the preceding Claims 1 to 4, **characterized in that** in the case of a seat structure in the form of a shell, the shell (2) has at least one fold (11) which runs transversely to the longitudinal axis of the vehicle and in front of which the support (5) is arranged.

7. Vehicle seat according to at least one of the preceding claims, **characterized in that** the support (5) in the vertical direction is of sufficiently great stiffness that it is largely undeformable in this direction.

8. Vehicle seat according to at least one of the preceding claims, **characterized in that** the support (5) consists of a tube (6) having a vertical web (7).

## Revendications

1. Siège de véhicule, en particulier siège de véhicule automobile,
a) le siège présentant au moins un élément d'absorption d'énergie,
b) l'élément d'absorption d'énergie étant constitué par un support (5) agencé dans la partie antérieure du siège (2) au-dessous de la zone de confort et qui peut être déformé en direction horizontale par le bassin (8) du passager (9) lors de son avancement consécutif à un fort ralentissement du véhicule, en particulier à la suite d'une collision, et
c) la structure de siège dans la zone postérieure (2b) du siège, en particulier à proximité su support (5) étant au moins partiellement déformable vers le bas par le bassin (8) du passager (9) lors de son avancement consécutif à un fort ralentissement du véhicule,
**caractérisé en ce que**
le support (5) déformable est agencé dans la partie antérieure du siège en tant que composant séparé et **en ce que** le flux des forces entre le support (5) et la structure de siège déformable est entièrement ou partiellement découplé de sorte que la position en hauteur du support (5) reste au moins presque sans modification lors de la déformation de la structure de siège.

2. Siège de véhicule selon la revendication 1, **caractérisé en ce que** le support (5) s'étend sur toute la largeur du siège et est relié aux extrémités à la structure de siège tandis qu'il n'y a pas de liaison avec la structure de siège dans la zone restante.

3. Siège de véhicule selon la revendication 1, **caractérisé en ce que** le support (5) s'étend sur toute la largeur du siège et est relié aux extrémités à la structure de siège, une liaison continue ou partiellement interrompue existant dans la zone restante.

4. Siège de véhicule selon l'une ou l'autre des revendications 1 et 2, **caractérisé en ce que** dans le cas d'une structure de siège en forme de coque, la coque (2) présente une fente (4) s'étendant perpendiculairement à l'axe longitudinal du véhicule, dans laquelle est agencé le support (5).

5. Siège de véhicule selon au moins l'une quelconque des revendications précédentes, **caractérisé en ce que** la zone postérieure (2b) de la structure de siège est réalisée sous forme de treillis (12) devant lequel est agencé le support (5).

6. Siège de véhicule selon au moins l'une quelconque des revendications précédentes 1 à 4, **caractérisé en ce que** dans le cas d'une structure de siège en forme de coque, la coque (2) présente au moins un pli (11) s'étendant perpendiculairement à l'axe longitudinal du véhicule, devant lequel est agencé le support (5).

7. Siège de véhicule selon au moins l'une quelconque des revendications précédentes, **caractérisé en ce que** le support (5) présente en direction verticale une rigidité aussi importante qu'il est pratiquement indéformable dans cette direction.

8. Siège de véhicule selon au moins l'une quelconque des revendications précédentes, **caractérisé en ce que** le support (5) est constitué d'un tube (6) avec une traverse (7) perpendiculaire.
